Europäisches Patentamt

European Patent Office

Office européen des brevets

(19)

(11) Numéro de publication: **0 032 079**
**B1**

# (12) FASCICULE DE BREVET EUROPEEN

(45) Date de publication du fascicule du brevet: **02.11.83**

(51) Int. Cl.³: **B 60 D 5/00**

(21) Numéro de dépôt: **80401768.9**

(22) Date de dépôt: **09.12.80**

(54) **Véhicule articulé, notamment autobus articulé**

(30) Priorité: **07.01.80 FR 8000215**

(43) Date de publication de la demande:
**15.07.81 Bulletin 81/28**

(45) Mention de la délivrance du brevet:
**02.11.83 Bulletin 83/44**

(84) Etats contractants désignés:
**AT BE CH DE GB IT LI LU NL SE**

(56) Documents cités:
**BE - A - 549 832**
**BE - A - 552 998**
**DE - B - 1 001 595**
**FR - A - 1 120 094**
**GB - A - 685 508**

(73) Titulaire: **S.A. Louis Heuliez Société dite:**
**7, rue Louis Heuliez**
**F-79140 Cerizay (FR)**

(72) Inventeur: **Queveau, Gérard**
**Amik-Farm**
**F-79140 Le Pin (FR)**
Inventeur: **Cheron, Christian**
**59, rue de Malabrit**
**F-79300 Bressuire (FR)**

(74) Mandataire: **Rodhain, Claude**
**Cabinet Claude RODHAIN 30, rue La Boétie**
**F-75008 Paris (FR)**

Courier Press, Leamington Spa, England.

Véhicule articulé, notamment autobus articulé

La présente invention concerne les véhicules articulés, tels que les autobus ou les trolleybus articulés, du type comprenant de façon connue un véhicule principal, comportant de préférence deux essieux, et au moins une remorque, comportant de préférence un seul essieu, reliée au véhicule principal par une articulation à trois degrés de liberté, c'est-à-dire autorisant des mouvements de lacet, de roulis et de tangage, cette articulation comprenant au moins une pièce fixée sur le véhicule principal, une pièce fixée sur la remorque et une pièce intermédiaire, telle que de'coite par exemple dans le brevet BE—A—552998.

Dans les véhicules de ce type connus, l'articulation comporte généralement soit une simple rotule, soit deux rotules, soit une double couronne de pivotement. Les articulations à simple rotule ou à deux rotules permettent de transmettre l'ensemble des efforts de traction et/ou de poussée, et de guidage; il convient toutefois de leur associer un dispositif d'amortissement permettant de stabiliser et/ou de limiter les déviations relatives de la remorque par rapport au véhicule principal, ce dispositif étant dans le premier cas disposé entre les carrosseries des deux parties du véhicule, tandis que dans le second cas il est intégré à l'articulation et transmet donc directement les efforts de châssis à châssis. Le troisième type d'articulation comporte deux couronnes de pivotement qui sont disposées l'une au-dessus de l'autre, et fixées respectivement sur les châssis des deux parties du véhicule et entre lesquelles est interposé un roulement articulé, ce dernier rendant possible les mouvements de roulis, tandis que les couronnes transmettent bien les efforts de traction et/ou de poussée, et de guidage, un dispositif de stabilisation étant encore associé à cette articulation et disposé entre les carrosseries.

Or on a constaté que parmi les améliorations recommandées par les utilisateurs de véhicules articulés, notamment de transports en commun, le principal souhait converne la réduction de la hauteur du plancher. Toutefois, au niveau de l'articulation elle-même, il n'a jusqu'à maintenant pas été possible d'obtenir une réduction notable de la hauteur de la plate-forme de communication qui est prévue à ce niveau, entre les planchers des deux parties du véhicule, en raison de la complexité et, partant, de l'encombrement, au moins vertical, des articulations connues. Etant donné que, dans la plupart des cas, cette hauteur de la plate-forme détermine celle des deux planchers, afin de conserver une bonne accessibilité entre les deux parties du véhicule, ces planchers ne pouvaient présenter une garde importante par rapport au sol, de sorte que, pour faciliter la montée et la descente, il était pratiquement nécessaire de créer une réduction de hauteur de l'ensemble des planchers et de la plate-forme, par exemple en faisant jouer la suspension pneumatique lors des arrêts, ou encore en utilisant des roues et pneus de diamètre plus petit.

C'est pourquoi la présente invention a pour but de fournir un véhicule articulé du type précité, qui offre une hauteur de plate-forme de communication réduite, et ceci, grâce à une articulation de faible épaisseur, tout en assurant, à l'aide de cette même articulation, l'ensemble des fonctions, d'une part, de transmission des efforts de traction et/ou de poussée, et de retenue ou de freinage, d'autre part, de liberté de mouvement relatif en rotation, roulis et tangage, et éventuellement enfin d'amortissement des mouvements de rotation.

En effet, tout d'abord l'articulation, seul lien rigide entre les deux parties du véhicule, doit transmettre les efforts de traction et/ou de poussée, et de retenue ou freinage. En outre, une possibilité de rotation de par exemple 90° (45° de chaque côté de l'axe du véhicule) est, en général, indispensable pour satisfaire aux règlements en matière de diamètre de giration (ou virage). Par ailleurs, une possibilité de mouvements relatifs en roulis et en tangage est également indispensable pour la bonne tenue de route du véhicule. Enfin, l'amortissement des mouvements de rotation est essentiel pour interdire le phénomène de lacet apparaissant à grande vitesse, en général au-dessus d'une vitesse de l'ordre de 70 km/h, cet amortissement contribuant bien entendu également largement à la tenue de route du véhicule.

Dans le but indiqué plus haut, l'invention a pour objet un véhicule du type précité, caractérisé en ce que les deux pièces de fixation et la pièce intermédiaire présentent des plans moyens pricipaux qui, en position de repos horizontal du véhicule, sont confondus suivant un même plan horizontal, l'une des deux pièces de fixation étant articulée sur la pièce intermédiaire à la fois autour d'un axe horizontal axial, par rapport à la longueur du véhicule, et autour d'un axe horizontal transversal, tandis que l'autre pièce de fixation est articulée sur cette même pièce intermédiaire autour d'un axe vertical.

Grâce à cet agencement, l'épaisseur de l'articulation est considérablement réduite, ce qui permet de disposer la plate-forme de communication du véhicule articulé à une hauteur minimale, tout en permettant la transmission de tous les efforts voulus.

De manière particulièrement avantageuse, il peut être prévu que la pièce intermédiaire comprenne deux chemins de roulement disposés en arc de cercle et présentant comme axe ledit axe vertical, ces chemins de roulement étant dirigés l'un vers l'une des pièces de fixation et l'autre vers l'autre pièce de fixation, tandis que deux groupes d'organes de roulement, portés par la seconde pièce de fixation de manière à être mobiles en rotation avec celle-ci autour dudit axe vertical, sont disposés respectivement en regard de ces deux chemins de roulement. Ces organes de roulement peuvent, par example, être constitués par des galets cylindriques à axe vertical. Ainsi, la pièce intermédiaire permet bien une transmission des efforts de traction ou poussée, suivant que c'est le véhicule principal ou la remorque qui est moteur, grâce à l'un des groupes d'organes de roulement, ainsi que des efforts de retenue ou freinage, grâce au second groupe d'organes de roulement, tandis que ce même montage autorise les mouvements de rotation relatifs des deux parties du véhicule.

Dans un mode de réalisation particulier de l'invention, la pièce intermédiaire peut comporter, d'une part, une partie de roulement en forme au moins de section de couronne cylindrique présentant une paroi verticale sur laquelle sont ménagés les deux chemins de roulement et, d'autre part, une partie d'articulation sur la première pièce de fixation. Cette forme est particulièrement simple et facile à réaliser, et offre surtout l'épaisseur minimale que l'articulation peut présenter puisque cette épaisseur est pratiquement limitée à la hauteur des organes de roulement, à l'épaisseur près des éléments de fixation ou de maintien des organes.

Il peut de préférence être prévu que la partie de roulement de la pièce intermédiaire présente la forme d'une section de couronne non fermée disposée de manière symétrique par rapport à l'axe longitudinal du véhicule et en ce que ce sont les deux faces opposées de la paroi verticale de cette section de couronne qui constituent les deux chemins de roulement. Cet assemblage autorise les mouvements relatifs limités de roulis et de tangage apparaissant entre les deux parties du véhicule.

Dans un mode de réalisation particulier, il peut être prévu que l'articulation incorpore un dispositif d'amortissement des mouvements de rotation comprenant, d'une part, une surface de frottement prévue sur l'une des deux pièces constituée par la pièce intermédiaire et par la seconde pièce de fixation et, d'autre part, un élément de frottement monté sur l'autre pièce.

De manière particulièrement avantageuse, l'élément de frottement est constitué par une garniture de friction soumise à la sollicitation d'un organe de pression, tandis que, de préférence, la section de couronne de la partie de roulement de la pièce intermédiaire comprend deux rebords horizontaux formant avec la paroi verticale un profil en U à l'intérieur duquel vient s'engager la section de couronne de la seconde pièce de fixation qui comporte alors deux garnitures de friction et deux pistons à actions opposées.

Un tel agencement permet parfaitement d'intégrer un dispositif d'amortissement dans l'articulation tout en conservant pour celle-ci une épaisseur réduite au minimum.

Il est enfin possible de prévoir extrêmement avantageusement, un organe de captage de l'effort de traction ou poussée, disposé en regard de l'une des pièces de l'articulation et, de préférence, dans le cas où la pièce intermédiaire comprend des chemins pour organes de roulement, l'organe de captage est interposé entre la seconde pièce de fixation et les organes de roulement associés au chemin de roulement dirigé vers cette pièce de fixation, cet organe de captage étant avantageusement constitué d'au moins deux capteurs orientés radialement par rapport à l'axe vertical de la pièce intermédiaire, suivant des directions distinctes, symétriques par rapport à l'axe longitudinal de l'articulation.

Grâce à cette disposition, il est possible de mesurer la décomposition de l'effort de traction ou de poussée selon au moins deux directions et donc de déterminer parfaitement la valeur de la composante transversale de cet effort afin de pouvoir comparer celle-ci à une valeur de seuil pour assurer la stabilité transversale du véhicule en cas de virage, le dépassement de ce seuil provoquant le transfert d'une partie de l'effort de propulsion d'un essieu de l'une des parties du véhicule sur un essieu de l'autre partie, ainsi que cela est plus particulièrement décrit dans le brevet français FR—A—2449585.

L'invention trouve une application particulièrement avantageuse sur les véhicules articulés du type "pousseur", c'est-à-dire dans lesquels c'est la remorque qui est motrice. Dans cette application, la première pièce de fixation est avantageusement prévue sur la remorque et la seconde pièce de fixation sur le véhicule principal, la pièce intermédiaire servant dans ce cas à transmettre principalement les efforts de poussée et de retenue.

D'autres caractéristiques et avantages de l'invention ressortiront de la description qui va suivre, à titre d'exemple non limitatif et en regard des dessins annexés sur lesquels:

La Fig. 1 représente une vue de dessus schématique d'un autobus articulé équipé d'une articulation conforme à l'invention, la remorque de cet autobus comportant deux essieux.

La Fig. 2 représente à plus grande échelle la partie centrale de cette vue de dessus, illustrant de manière plus précise l'articulation et l'essieu avant de la remorque.

La Fig. 3 représente une vue en élévation correspondant à la partie du véhicule représentée à la Fig. 2.

La Fig. 4 représente une vue en perspective et partiellement éclatée de l'articulation de cet autobus.

La Fig. 5 représente une vue partielle et à plus grande échelle de la pièce de fixation de cette articulation qui est fixée sur le véhicule principal, cette vue étant également éclatée.

La Fig. 6 représente schématiquement le circuit de commande et de régulation du dispositif d'amortissement de l'articulation.

La Fig. 7 représente une vue en perspective éclatée des organes de l'articulation associés à l'organe de captage de l'effort de traction ou poussée.

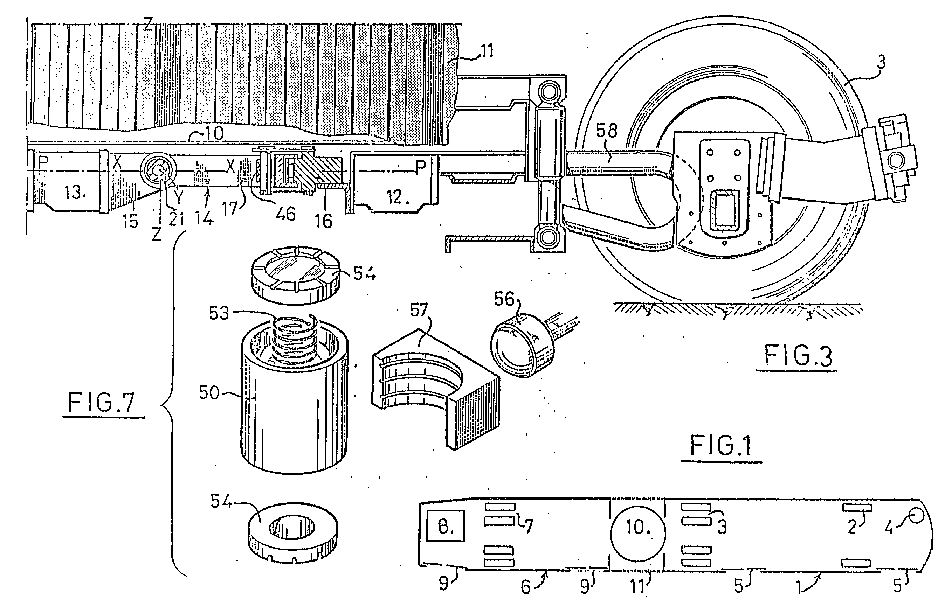

L'autobus articulé représenté par la Fig. 1 comprend une partie avant ou véhicule principal 1, comportant un essieu avant directeur 2, un essieu arrière éventuellement moteur 3, un poste de conduite 4 et deux portes 5, ainsi qu'une partie arrière ou remorque 6 comportant un essieu unique 7, un ensemble moteur 8 et deux portes 9, ces deux parties du véhicule étant reliées par une articulation 14 à trois degrés de liberté disposée au-dessous d'une plate-forme de communication 10, les deux carrosseries étant, en outre, réunies par des soufflets 11.

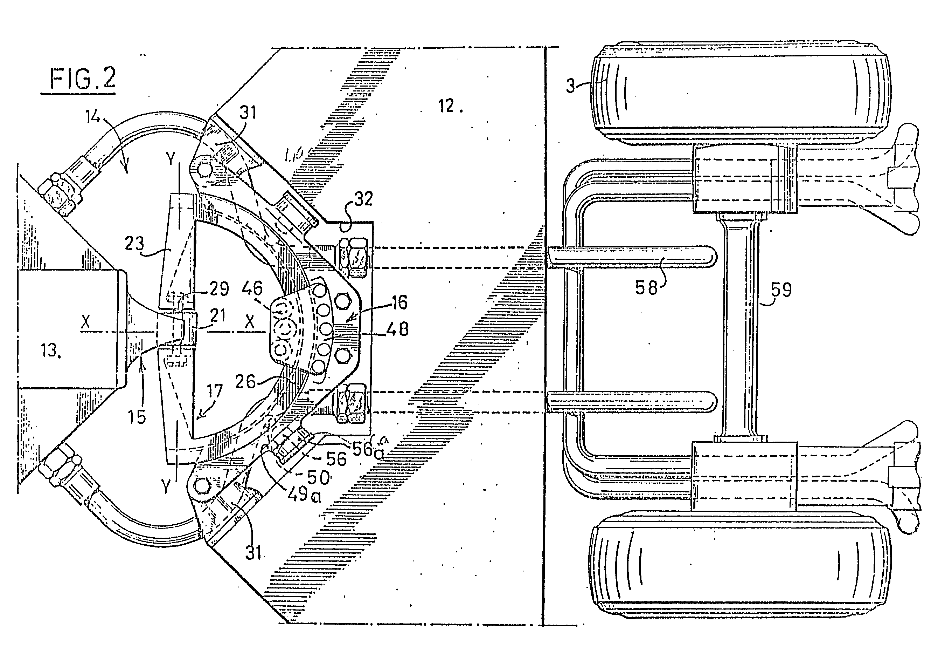

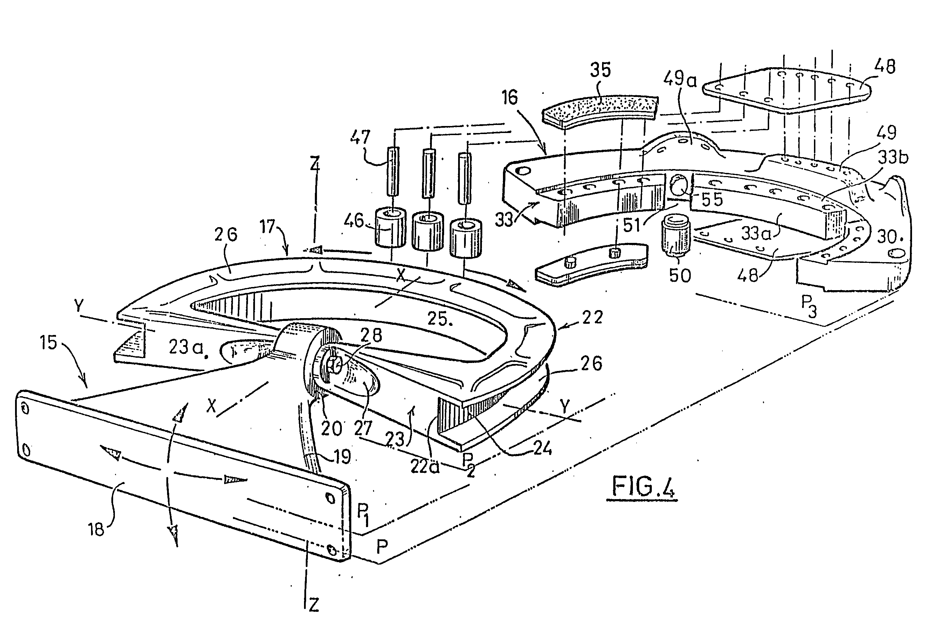

Les Fig. 2 et 3 montrent plus en détail des éléments des châssis respectivements 12 et 13 des deux parties de véhicule, l'articulation 14 étant disposée entre ces deux châssis.

Cette articulation comprend trois pièces principales constituées par une première pièce de fixation 15 qui est fixée sur le châssis 13 de la remorque, une seconde pièce de fixation 16 qui est fixée sur le châssis 12 du véhicule principal et une pièce intermédiaire 17 disposée entre ces deux pièces.

Comme le montre plus précisément la Fig. 4, les deux pièces de fixation 15 et 16 et la pièce intermédiaire 17 sont des pièces présentant une épaisseur relativement faible par rapport à leurs deux autres dimensions, c'est-à-dire qu'elles s'étendent essentiellement suivant les deux directions d'un plan à peu près horizontal, ces pièces présentant ainsi des plans moyens principaux $P_1$, $P_2$ et $P_3$ qui, en position de repos horizontal du véhicule, sont confondus suivant un même plan horizontal P (Fig. 3 et Fig. 4).

La première pièce de fixation 15 est articulée sur la pièce intermédiaire 17, à la fois autour d'un axe horizontal axial X—X, par rapport à la longueur du véhicule, et autour d'un axe horizontal transversal Y—Y, tandis que la seconde pièce de fixation 16 est articulée sur cette même pièce intermédiaire 17 autour d'un axe vertical Z—Z (Fig. 2 à 4).

La preimière pièce de fixation est une pièce métallique, venue de moulage, présentant une embase verticale, mais de faible hauteur 18 qui permet de boulonner cette pièce sur le châssis 13 de la remorque, ainsi qu'une partie 19 s'étendant principalement suivant le plan horizontal $P_1$ et affectant une forme qui converge en s'éloignant de l'embase 18, cette partie 19 se terminant par une partie extrême de hauteur légèrement plus importante, affectant la forme d'un fourreau cylindrique d'axe Y—Y. Cette partie 20 en forme de fourreau sert d'élément récepteur ou de logement pour un bloc élastique 21 en caoutchouc spécial comprimé, du type des blocs utilisés pour la fixation souple des moteurs et qui sont connus sous le nom commercial de Silent bloc, ce bloc n'étant visible que sur les Fig. 2 et 3.

La pièce intermédiaire 17 est une pièce métallique, venue de moulage ou d'usinage, et elle présente la forme d'une demi-couronne cylindrique à section en U constituant une partie de roulement 22, cette demi-couronne s'étendant donc sur un angle d'environ 180° d'angle au centre et se refermant par une partie d'articulation 23 disposée suivant la diamètre délimitant cette demi-couronne. La demi-couronne cylindrique 22 comprend une paroi verticale 22a constituant la base de la section en U, cette paroi verticale cylindrique ayant pour axe l'axe vertical Z—Z de l'articulation. La surface extérieur 24 de cette paroi 22a constitue un premier chemin de roulement dirigé vers la second pièce de fixation 16, tandis que sa face intérieure 25 constitue un second chemin de roulement dirigé vers la première pièce de fixation 15.

La demi-couronne 22 de la pièce intermédiaire 17 comprend par ailleurs deux rebords horizontaux 26 disposés au-dessus et au-dessous de la paroi verticale 22a et dirigés vers l'extérieur par rapport à l'axe Z—Z de manière à constituer avec cette paroi 22a la section en U indiquée.

La partie diamétrale d'articulation 23 de la pièce intermédiaire 17 est constituée de bras radiaux 23a partant de la demi-couronne extérieure 22 et se dirigeant vers l'axe Z—Z, mais s'arrêtant peu avant l'emplacement du fourreau 20 de la première pièce de fixation 15. Les deux extrémités intérieures de ces bras 23a com-portent des évidements 27 leur permettant de recevoir les têtes 28 d'un boulon 29 d'assez fort diamètre qui traversales extrémités non évidées des bras 23a, ainsi que la partie centrale du bloc élastique 21, ce boulon 29 étant précisément orienté suivant l'axe transversal Y—Y.

La seconde pièce de fixation 16 est une pièce métallique, venue de moulage et usinée, qui présente également dans l'ensemble la forme d'une demi-couronne d'axe Z—Z, mais s'étendant sur un angle au centre légèrement inférieur à 180°. Cette demi-couronne présente une partie extérieure, dans le sens radial, 30 qui sert essentiellement de support et permet sa fixation par boulonnage aux deux extrémité de la couronne, sur des consoles 31 prévues en saillie sur le châssis 12 du véhicule principal qui présente un évidement 32 lui permettant de recevoir cette pièce 16.

Cette pièce présente, par ailleurs, vers l'intérieur, dans le sens radial, une seconde partie, annulaire, 33 qui est disposée suivant trois secteurs séparés suivant le sens circonférentiel, ces secteurs comportant une surface verticale cylindrique 33a tournée vers la face 24 de la pièce intermédiaire 17 et présentant un rayon légèrement supérieur à celui de cette surface 24, ainsi que deux surfaces horizontales supérieure et inférieure, 33b qui sont situées respectivement en regard des faces intérieures des rebords 26 de la pièce intermédiaire 17.

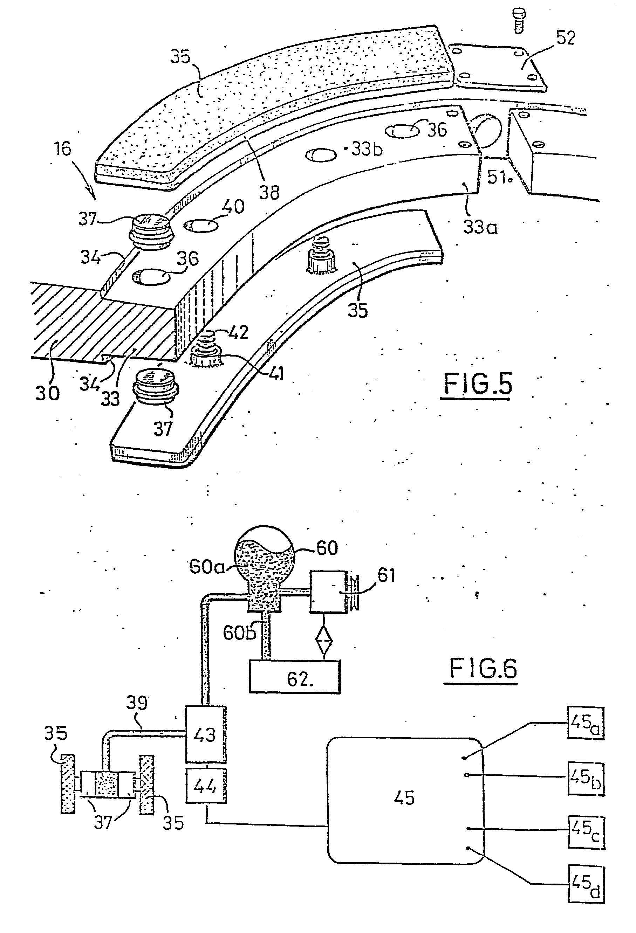

Cette partie intérieure 33 présente une hauteur inférieure à celle de la partie 30 et, comme le montre plus précisément la Fig. 5, ses surfaces horizontales 33b sont raccordées à cette dernière par des épaulements 34.

Ces épaulements servent de guidage aux bords extérieurs de garnitures de friction 35, par exemple en aggloméré d'amiante, qui ont la même forme que les secteurs 33 et sont prévues à raison de deux par secteur, l'une au-dessus et l'autre au-dessous. Chaque secteur de la partie 33 comporte, en outre, des alésages verticaux 36, par exemple au nombre de deux par secteur, qui contiennent chacun deux pistons 37 venant s'appuyer sur les patins de support 38 des garnitures 35, des conduits 39 étant par ailleurs ménagés dans l'épaisseur de la pièce 16 pour déboucher dans la partie centrale des alésages 36. Il est également prévu, dans la partie 33 de la pièce 16, d'autres alésages 40, au nombre de deux par secteur, qui servent de guidage à des collerettes 41 prévues sur les patins 38 et entre lesquelles sont disposés des ressorts 42 travaillant à la traction, ces ressorts ayant pour but de maintenir les patins 38 appliqués sur la partie 33 de la pièce en dehors de l'action des pistons 37. L'épaisseur des patins et garnitures est telle que, en dehors de l'action des pistons 37, ces garnitures ne viennent pas au contact des rebords 26 de la pièce intermédiaire 17.

Comme le montre la Fig. 6, les conduits 39 de la pièce de fixation 16 sont raccordés à la sortie d'un organe distributeur 43 dont l'entrée est raccordée à la chambre 60a d'un accumulateur oléopneumatique 60, qui contient un fluide hydraulique, cette même chambre 60a étant en liaison avec une pompe de déplacement 61 dont l'aspiration est reliée à un réservoir 62 dans lequel retourne une conduite de trop-plein 60b de l'accumulateur 60. L'organe mobile du distributeur 43 est relié à une commande ou unité de pilotage 44 qui est elle-même reliée à un bloc de régulation 45 présentant plusieurs entrées reliées respectivement à un détecteur de vitesse du véhicule 45a, à un détecteur d'effort de freinage 45b (mesurant par exemple la pression dans les cylindres de frein), à des contacts de fin de course 45c (agissant par exemple par l'intermédiaire d'électrovannes, et disposés par exemple sur la pièce de fixation 16 pour être actionnés par des butées ou saillies prévues sur la pièce intermédiaire 17), et enfin, une commande manuelle d'urgence 45d.

Comme le montrent les Fig. 2 et 4, il est par ailleurs prévu deux groupes d'organes de roulement qui sont portés par la seconde pièce de fixation 16, de manière à être mobiles en rotation avec celle-ci autour de l'axe vertical Z—Z, ces organes de roulement étant destinés à coopérer avec les deux surfaces de roulement 24 et 25 de la pièce intermédiaire 17.

Le premier groupe d'organes de roulement est constitué par des galets cylindriques 46, par exemple au nombre de trois, qui sont montés sur des axes 47 fixés entre deux plaques 48 elles-mêmes fixées sur des bossages 49 prévus au-dessous et au-dessus de la partie de support 30 de la pièce 16, dans la partie centrale de cell-ci. Ces plaques 48 sont disposées de manière à venir chevaucher la demi-couronne 22 de la pièce intermédiaire 17, de sorte que les galets 46 sont disposés au contact de la face intérieure 25 de la paroi 22a de la pièce intermédiaire. Du fait de la fixation des plaques 48 en position centrale sur la pièce 16, les galets 46 peuvent rouler sur la surface 25, de part et d'autre de leur position intermédiaire et suivant un angle qui est peu inférieur à 60° et en tous cas nettement supérieur à 45°, ceci de part et d'autre de la position centrale.

Le second groupe d'organes de roulement est constitué de deux galets cylindriques 50 qui sont disposés respectivement dans les deux logements 51 qui sont délimités par les trois secteurs de la partie 33 de la pièce 16, pris deux à deux, ainsi que par des plaquettes d'obturation 52 prévues respectivement au-dessus et au-dessous de ces galets 50 et fixées sur les surfaces horizontales des secteurs 33. Comme le montre plus précisément la Fig. 7, chaque galet 50 est creux et renferme un ressort 53 travaillant à la compression et s'appuyant sur deux fonds 54 qui sont montés coulissant dans les extrémités du galet, et font légèrement saillie par rapport à celui-ci de manière à venir s'appuyer sur les plaquettes d'obturation 52 sous l'action du ressort 53.

Comme le montrent les Fig. 4 et 5, il est prévu dans l'épaisseur de la partie de support 30 de la pièce 16, deux alésages 55 horizontaux et radiaux par rapport à l'axe Z—Z, ces alésages débouchant respectivement dans les deux logements 51, et chacun de ces alésages 55 contient la tête de détection 56 d'un capteur d'effort 56a, qui est, par exemple, du type à résistance variable (mais peut également être du type hydraulique, ou encore à quartz piézo-électrique). Comme le montre la Fig. 7, cette tête 56 du capteur est disposée en regard et au contact d'un élément de transmission d'effort 57 qui est guidé dans le logement 51 et présente un face plane en regard de la tête 56 et une face semi-cylindrique en face du galet 50. Le diamètre du galet 50 et l'épaisseur de la pièce 57 en son milieu sont tels que normalement le galet 50 qui est engagé à l'intérieur de la section en U de la demi-couronne 22 de la pièce 17 se trouve au contact de la surface de roulement extérieure 24 de cette pièce sans toutefois que la pièce intermédiaire 57 transmette un effort à la tête de capteur 56 lorsque le véhicule se trouve en position horizontale de repos parfaite. Par ailleurs, la partie de support 30 de la pièce 16 présente sur le contour extérieur de sa face supérieure deux autres bossages 49a disposés au-dessus des logements 51 et servant à la fixation, comme le montre la Fig. 2, des corps 56a des capteurs dont les têtes 56 traversent les alésages 55.

L'épaisseur de ces bossages 49a et du bossage 49 sont suffisamment faibles pour que l'épaisseur totale de la pièce 16 ne soit supérieure que de peu au reste de l'articulation.

Dans la réalisation ici visée (qui n'est pas limitative), le moteur 8 est disposé à l'arrière de la remorque, de sorte que c'est la remorque elle-même qui pousse la véhicule principal 1, l'ensemble étant alors appelé véhicule "pousseur". Par ailleurs, il peut être avantageusement prévu qu'une partie de l'effort total de propulsion fourni par le groupe moteur soit envoyée sur l'essieu arrière 3 du véhicule principal, ceci par exemple à l'aide d'une transmission hydrostatique dont on n'aperçoit que des élément de tuyauterie 58 sur la Fig. 2, cette transmission entraînant des moteurs hydrauliques 59 calés sur l'essieu 3.

En circulation normale en marche avant, la remorque fournit un effort de poussée qui est transmis par la pièce 15 à la pièce intermédiaire 17, (ceci grâce à l'articulation du bloc élastique 21), puis de cette pièce intermédiaire à la pièce de fixation 16 grace à l'appui de la paroi 22a de la couronne 22 sur les deux galets 50 qui prennent eux-mêmes appui sur les têtes de capteurs 56 de la pièce 16. Ces capteurs sont conçus de manière telle que, tant que l'effort de poussée n'atteint pas le seuil prédéterminé, il y a transmission normale de l'effort de poussée sur le véhicule principal sans qu'il n'y ait aucune modification de l'effort de propulsion fourni par le moteur 8.

Si, toujours en déplacement en ligne droite, le groupe moteur 8 ralentit, ou bien si l'on applique un effort de freinage sur la remorque, il se produit un effet de retenue qui est également tranmis par l'articulation, la pièce intermédiaire 17 prenant appui sur les galets 46 portés par la pièce de fixation 16 associée au véhicule principal, de sorte que ce dernier se trouve "retenu" par la remorque. Ces galets agissent également pour tirer la véhicule principal lorsque le groupe moteur 8 est mis en marche arrière, la pièce intermédiaire 17 appliquant un effort de traction par sa surface 25 sur les galets 46 de la pièce 16 associée à ce véhicule principal.

Si le véhicule se déplace en virage, l'effort de poussée est toujours transmis de la même façon par l'intermédiaire de l'articulation, mais cette dernière a subi un déplacement, celui-ci se traduisant par un mouvement de rotation relatif entre, d'une part, la pièce intermédiaire 17 et, d'autre part, la pièce de fixation 16, les galets 46 et 50 roulant respectivement sur les surfaces de roulement 25 et 24 de la pièce intermédiaire, jusqu'à obtention de l'angle de braquage voulu. En raison du dimensionnement prévu pour les pièces 16 et 17, cet angle de braquage peut atteindre 45° respectivement de chaque côté de l'axe longitudinal du véhicule.

Si, par ailleurs, en raison par exemple d'irrégularités de planéité du sol, ou encore sous l'effet d'oscillations appliquées à une seule partie du véhicule, il peut apparaître des mouvements relatifs de roulis ou de tangage entre les deux parties du véhicule, ces mouvements étant autorisés par la présence du bloc élastique 21 interposé entre la pièce de fixation 15 et la pièce intermédiaire 17. Ces mouvements relatifs sont bien entendu d'une amplitude suffisamment faible pour être autorisés par le bloc élastique.

Par ailleurs, les mouvements de rotation relatifs rappelés plus haut, peuvent être soit amortis soit totalement bloqués grâce à l'action des garnitures de friction 35. En effet, sous l'action de la commande 44, le distributeur 43 peut envoyer un fluide hydraulique contenu dans l'accumulateur 60 sous la pression fournie par la pompe 62, jusque dans la chambre centrale des alésages 36, cette pression hydraulique appliquant les pistons 37 sur les garnitures de friction 35 qui viennent alors au contact des rebords 26 de la pièce intermédiaire 17. En fonction de la nature du détecteur qui est mis en service en connexion avec le bloc de régulation 45 et la commande 44, il est ainsi possible de procéder à un freinage de la pièce intermédiaire 17, donc à l'amortissement d'un mouvement de rotation donné, soit en fonction de la vitesse du véhicule, soit encore en fonction de l'effort de freinage particulier appliqué au véhicule, ce qui permet d'augmenter l'amortissement de l'articulation en fonction de cet effort, soit encore une commande manuelle qui est à la disposition du conducteur et qui peut permettre à celui-ci de "rigidifier" le véhicule dans les cas d'utilisation extrême (verglas, neige, boue, etc.).

Au cours d'un déplacement en virage, l'effort de poussée qui est appliqué par la remorque sur l'articulation et en particulier sur la pièce intermédiaire 17 de celle-ci, ne se répartit pas de manière symétrique sur les deux galets 50 et par conséquent sur les deux têtes de capteurs 56, de sorte que, à partir des efforts relevés sur ces deux têtes de capteurs, il est possible de déterminer la composante transversale de l'effort de poussée transmis. Si cette composante dépasse une valeur de seuil prédéterminée, il peut apparaître un défaut de stabilité, et l'on peut remédier à cette situation en utilisant un dispositif tel que celui prévu dans le brevet français FR—A—2449585. Ce dispositif permet en effet d'envoyer une partie de l'effort de propulsion fourni par le groupe moteur 8 sur l'essieu central 3 du véhicule, ce qui a pour effet de maintenir la stabilité transversale de l'ensemble.

## Revendications

1. Véhicule articulé, du type comprenant un véhicule principal (1) comportant au moins un essieu (2) et au moins une remorque (6) comportant également au moins un essieu (7) et reliée à ce véhicule principal par une articulation (14) à trois degrés de liberté, cette articulation comprenant au moins une pièce (16) fixée sur le véhicule principal, une pièce (15) fixée sur la remorque et une pièce intermédiaire (17), caractérisé en ce que les deux pièces de fixation (15, 16) et la pièce intermédiaire (17) présentent des plans moyens principaux (P₁, P₂, P₃), qui, en position de repos horizontal du véhicule complet, sont confondus suivant un même plan horizontal (P), l'une (15) des deux pièces de fixation étant articulée sur la pièce intermédiaire (17) à la fois autour d'un axe horizontal axial (X—X), par rapport à la longueur du véhicule, et autour d'un axe horizontal transversal (Y—Y), tandis que l'autre pièce de fixation (16) est articulée sur cette même pièce intermédiaire (17) autour d'un axe vertical (Z—Z).

2. Véhicule selon la revendication 1, caractérisé en ce que la pièce intermédiaire (17) comprend deux chemins de roulement (24, 25) disposés en arc de cercle et présentant comme axe ledit axe vertical (Z—Z), ces chemins de roulement étant dirigés l'un (24) vers l'une (16) des pièces de fixation et l'autre (25) vers l'autre pièce (15) de fixation, tandis que deux groupes d'organes de roulement (46, 50) portés par la seconde pièce de fixation (16) de manière à être mobiles en rotation avec celle-ci autour dudit axe vertical (Z—Z), sont disposés respectivement en regard de ces deux chemins de roulement (25, 24).

3. Véhicule selon la revendication 2, caractérisé en ce que les organes de roulement (46, 50) sont constitués par des galets cylindriques à axe vertical.

4. Véhicule selon l'une quelconque des revendications 2 et 3, caractérisé en ce que la pièce intermédiaire (17) comporte, d'une part, une partie de roulement (22) en forme au moins de section de couronne cylindrique présentant une paroi verticale (22a) sur laquelle sont ménagés les deux chemins de roulement (24, 25) et, d'autre part, une partie d'articulation (23) sur la première pièce de fixation (15).

5. Véhicule selon la revendication 4, caractérisé en ce que ladite partie de roulement (22) de la pièce intermédiaire (17) présente la forme d'une section de couronne non fermée disposée de manière symétrique par rapport à l'axe longitudinal (X—X) de l'articulation et en ce que ce sont les deux faces opposées (24, 25) de la paroi verticale (22a) de cette section de couronne qui constituent les deux chemins de roulement.

6. Véhicule selon l'une quelconque des revendications 4 et 5, caractérisé en ce que la section de couronne de la partie de roulement (22) de la pièce intermédiaire (17) est au plus égale à 180° d'angle au centre.

7. Véhicule selon l'une quelconque des revendications de 1 à 6, caractérisé en ce que pièce intermédiaire (17) comprend une partie d'articulation (23) sur la première pièce de fixation (15) et en ce qu'un bloc de matériau élastique (21) est interposé entre cette partie d'articulation (23) et ladite pièce de fixation (15).

8. Véhicule selon la revendication 7, caractérisé en ce que la partie d'articulation (23) de la pièce intermédiaire (17) comporte un élément de fixation horizontal transversal (29) et en ce que le bloc de matériau élastique (21) est interposé entre cet élément de fixation (29) et un élément récepteur (20) prévu sur ladite première pièce de fixation (15).

9. Véhicule selon la revendication 8 lorsqu'elle dépend de la revendication 6, caractérisé en ce que la partie d'articulation (23) de la pièce intermédiaire (17) est disposée sensiblement suivant un diamètre de la section de couronne (22) constituant la partie de roulement.

10. Véhicule suivant l'une quelconque des revendications de 1 à 9, caractérisé en ce que l'articulation (14) incorpore un dispositif d'amortissement (26, 35) des mouvements de rotation relatifs comprenant, d'une part, une surface de frottement (26) prévue sur l'une (17) des deux pièces constituées par la pièce intermédiaire (17) et par la seconde pièce de fixation (16) et, d'autre part, un élément de frottement (35) monté sur l'autre pièce (16).

11. Véhicule selon la revendication 10 lorsqu'elle dépend de la revendication 4, caractérisé en ce que la section de couronne de la partie de roulement (22) présente au moins un rebord horizontal (26) constituant ladite surface de frottement et en ce que la seconde pièce de fixation (16) présente également la forme d'une section de couronne (33) qui porte ledit élément de frottement (35) disposé également horizontalement, en regard de la surface de frottement (26).

12. Véhicule selon la revendication 11, caractérisé en ce que l'élément de frottement (35) est constitué par une garniture de friction soumise à la sollicitation d'un organe de pression (37).

13. Véhicule selon la revendication 12, caractérisé en ce que l'organe de pression (37) est un organe de pression par fluide relié à des moyens de réglage (45).

14. Véhicule selon la revendication 13, caractérisé en ce que les moyens de réglage (45) sont reliés à un détecteur de vitesse du véhicule (45a).

15. Véhicule selon la revendication 13, caractérisé en ce que les moyens de réglage (45) sont reliés à un détecteur d'effort de freinage du véhicule (45b).

16. Véhicule selon la revendication 13, caractérisé en ce que les moyens de réglage (45) sont reliés à un détecteur (45c) de fin de course de rotation de l'articulation autour de son axe vertical.

17. Véhicule selon la revendication 12, caractérisé en ce que l'organe de pression est constitué par au moins un piston (37) à commande par fluide disposé verticalement dans un logement (36) ménagé dans l'épaisseur de la section de couronne (33) de la seconde pièce de fixation (16).

18. Véhicule selon la revendication 17, caractérisé en ce que la section de couronne (22) de la partie de roulement de la pièce intermédiaire (17) comprend deux rebords horizontaux (26) formant avec la paroi verticale (22a) un profil en U à l'intérieur duquel vient s'engager la section de couronne (33) de la seconde pièce de fixation (16) qui comporte alors deux garnitures de friction (35) et deux pistons (37) à actions opposées.

19. Véhicule selon l'une quelconque des revendications de 1 à 18, caractérisé en ce qu'il comprend un organe (56) de captage de l'effort de traction ou poussée, disposé en regard de l'une des pièces de l'articulation.

20. Véhicule selon la revendication 19 lorsqu'elle dépend de la revendication 2, caractérisé en ce que l'organe de captage (56) est interposé entre la seconde pièce de fixation (16) et les organes de roulement (50) associés au chemin de roulement (24) dirigé vers cette pièce de fixation (16).

21. Véhicule selon la revendication 20, caractérisé en ce que l'organe de captage (56) est constitué d'au moins deux capteurs orientés radialement par rapport à l'axe vertical (Z—Z) de la pièce intermédiaire (17), suivant des directions distinctes, symétriques par rapport à l'axe longitudinal (X—X) de l'articulation.

**Patentansprüche**

1. Gelenkfahrzeug, bestehend aus einem führenden Fahrzeugteil (1) mit wenigstens einer Achse (2) und aus wenigstens einem geführten Fahrzeugteil (6), gleichfalls mit wenigstens einer Achse (7), welches mit dem führenden Fahrzeugteil über ein Gelenkteil (14), das drei Freiheitsgrade gewährt, verbunden ist, welches Gelenkteil wenigstens ein an dem führenden Fahrzeugteil (1) befestigtes Teil (16), ein an dem geführten Fahrzeugteil befestigtes Teil (15) und ein Zwischenteil (17) beinhaltet, dadurch gekennzeichnet, daß die beiden Befestigungsteile (15, 16) und das Zwischenteil (17) Haupt-Mittelebenen ($P_1$, $P_2$, $P_3$) haben, die in horizontaler Ruhestellung des Gesamtfahrzeuges in ein und derselben horizontalen Ebene liegen, daß eines (15) der beiden Befestigungsteile am Zwischenteil (17) in Bezug auf die Längsachse des Fahrzeuges um eine horizontale Achse (X—X) und um eine horizontale Querachse (Y—Y) schwenkbar angelenkt ist, und daß das andere Befestigungsteil (16) an dem gleichen Zwischenteil (17) um eine lotrechte Achse (Z—Z) schwenkbar angelenkt ist.

2. Gelenkfahrzeug nach Anspruch 1, dadurch gekennzeichnet, daß das Zwischenteil (17) zwei in Bezug auf die lotrechte Achse (Z—Z) kreisbogenförmig angeordnete Rollkränze (24, 25) aufweist, daß von diesen Rollkränzen der eine (24) zum einen (16) die Befestigungsteile und der andere (25) zum anderen der Befestigungsteile (15) hin gerichtet ist, während zwei Gruppen von Rollkörpern (46, 50) die vom zweiten Befestigungsteil (16) so getragen werden, daß sie mit diesem um die lotrechte Achse (Z—Z) rollend bewegbar sind, im Hinblick auf diese beiden Rollkränze (24, 25) angeordnet sind.

3. Gelenkfahrzeug nach Anspruch 2, dadurch gekennzeichnet, daß die Rollkörper (46, 50) durch zylindrische Rollen mit lotrechter Achse gebildet sind.

4. Gelenkfahrzeug nach einem der Ansprüche 2 bzw. 3, dadurch gekennzeichnet, daß das Zwischenteil (17) einerseits ein Rollteil (22) in Form wenigstens eines Sektors eines zylindrischen Kranzes mit einer lotrechten Wand (22a) beinhaltet, worauf die beiden Rollkränze (24, 25) angeordnet sind, und andererseits ein Gelenkteil (23) auf dem ersten Befestigungsteil (15) aufweist.

5. Gelenkfahrzeug nach Anspruch 4, dadurch gekennzeichnet, daß das Rollteil (22) des Zwischenteiles (17) die Form eines Sektors eines nicht geschlossenen Rollkranzes aufweist, der symmetrisch in Bezug auf die Längsachse (X—X) des Gelenkes angeordnet ist, und daß die beiden einander gegenüberliegenden Flächen bei (24, 25) der lotrechten Wand (22a) dieses Kranz-Sektors die beiden Laufflächen der Rollkränze bilden.

6. Gelenkfahrzeug nach einem der Ansprüche 4 bzw. 5, dadurch gekennzeichnet, daß der Sektor des Kranzes des Rollteiles (22) des Zwischenteiles (17) sich über mehr als 180° des Zentriwinkels erstreckt.

7. Gelenkfahrzeug nach einem der Ansprüche 1 bis 6, dadurch gekennzeichnet, daß das Zwischenteil (17) auf dem ersten Befestigungsteil (15) ein Gelenkteil (23) beinhaltet und daß zwischen diesem Gelenkteil (23) und dem Befestigungsteil (15) ein Körper (21) aus einem elastischen Material angebracht ist.

8. Gelenkfahrzeug nach Anspruch 6 bzw. 7, dadurch gekennzeichnet, daß das Gelenkteil (23) des Zwischenteiles (17) ein waagerecht querliegendes Befestigungsteil (29) aufweist und daß der Körper (21) aus elastischem Material zwischen das Befestigungsteil (29) und ein aufnehmendes Teil (20) eingefügt ist, das sich an dem ersten Befestigungsteil (15) befindet.

9. Gelenkfahrzeug nach Anspruch 8 unter Rückbezug auf Anspruch 6, dadurch gekennzeichnet, daß das Gelenkteil (23) des Zwischenteiles 17 eintsprechend einem Durchmesser des die Rollvorrichtung bildenden Rollteil Sektors (22) abgeordnet ist.

10. Gelenkfahrzeug nach einem der Ansprüche 1 bis 9, dadurch gekennzeichnet, daß das Gelenkteil (14) eine die relativen Rotationsbewegungen dämpfende Dampfungsvorrichtung (26, 35) aufweist und daß diese einerseits eine Reibfläche (26) beinhaltet, die auf einem (17) der beiden Teile vorgesehen ist, welche durch das Zwischenteil (17) und das zweite Befestigungsteil (16) gebildet sind, und andererseits mit einem Reibkörper (35) ausgestattet ist, der auf dem anderen Teil (16) befestigt ist.

11. Gelenkfahrzeug nach dem auf Anspruch 4 rückbezogenen Anspruch 10, dadurch gekennzeichnet, daß der Kranz-Sektor des Rollteiles (22) wenigstens einen horizontalen Flansch (26) aufweist, der die Reibfläche bildet, und daß das zweite Befestigungsteil (16) ebenfalls die Form eines Kranz-Sektors (33) hat, der den in Hinblick auf die Reibfläche (26) gleichfalls horizontalen Reibkörper (35) trägt.

12. Gelenkfahrzeug nach Anspruch 11, dadurch gekennzeichnet, daß der Reibkörper (35) als Friktions-Garnitur gestaltet und über ein Druckorgan (37) belastbar ist.

13. Gelenkfahrzeug nach Anspruch 12, dadurch gekennzeichnet, daß das Druckorgan (37) über eine Regelvorrichtung (45) durch einen Fluid-Druck beaufschlagt ist.

14. Gelenkfahrzeug nach Anspruch 13, dadurch gekennzeichnet, daß die Regelvorrichtung (45) mit einem Geschwindigkeits-Detektor (45a) des Fahrzeuges verbunden ist.

15. Gelenkfahrzeug nach Anspruch 13, dadurch gekennzeichnet, daß die Regelvorrichtung (45) mit einem Bremskraft-Detektor (45b) des Fahrzeuges verbunden ist.

16. Gelenkfahrzeug nach Anspruch 13, dadurch gekennzeichnet, daß die Regelvorrichtung (45) mit einem Detektor (45c) verbunden ist, der das Ende der Rotation des Gelenkes um dessen lotrechte Achse anzeigt.

17. Gelenkfahrzeug nach Anspruch 12, dadurch gekennzeichnet, daß das Druckorgan zumindest einen Fluid-beaufschlagten Kolben (37) beinhaltet.

18. Gelenkfahrzeug nach Anspruch 17, dadurch gekennzeichnet, daß der Sektor des Rollkranzes (22) zum Zwischenteil (17) zwei waagerechte Flansche (26) aufweist, die mit der lotrechten Wand (22a) ein U-Profil bilden, in das der Kranz-Sektor (33) des zweiten Befestigungsteiles (16) einlegbar ist, das somit zwei Reibkörper-Garnituren (35) sowie zwei Kolben (37) mit einander entgegengesetzter Wirkung aufweist.

19. Gelenkfahrzeug nach einem der Ansprüche 1 bis 18, dadurch gekennzeichnet, daß mindestens eine Meßvorrichtung (56) für die Beschleunigungs-bzw. Verzögerungskräfte zwischen dem einen bzw. dem anderen Teil des Gelenkes (14) eingebaut ist.

20. Gelenkfahrzeug nach dem auf Anspruch 2 rückbezogenen Anspruch 19, dadurch gekennzeichnet, daß die Meßvorrichtung (56) zwischen dem zweiten Befestigungsteil (16) und den Roll-Organen (50) angeordnet ist, welche dem Rollkranz (24) zugehörig sind und zum Befestigungsteil (16) hinweisen.

21. Gelenkfahrzeug nach Anspruch 20, dadurch gekennzeichnet, daß die Meßvorrichtung (56) zumindest aus zwei, in Bezug auf die lotrechte Achse (Z—Z) des Zwischenteiles (17) radial orientierten sowie in Bezug auf die Längsachse (X—X) des Gelenkes entsprechend zwei bestimmten symmetrischen Richtungen ausgerichteten einzelnen Meßvorrichtungen gebildet ist.

## Claims

1. An articulated vehicle, of the type comprising a main vehicle (1) comprising at least one axle (2) and at least one trailer (6) also comprising at least one axle (7) and connected to the main vehicle by an articulation (14) having three degrees of freedom, the articulation comprising at least one part (16) fixed on the main vehicle, a part (15) fixed on the trailer and an intermediate part (17), characterized in that the two fixing parts (15, 16) and the intermediate part (17) have principal mean planes ($P_1$, $P_2$, $P_3$) which, in the horizontal rest position of the complete vehicle, merge into the same horizontal plane (P), one (15) of the two fixing parts being articulated on the intermediate part (17) both about a horizontal axis (X—X) which is axial relative to the length of the vehicle and about a transverse horizontal axis (Y—Y), while the other fixing part (16) is articulated on the same intermediate part (17) about a vertical axis (Z—Z).

2. A vehicle according to claim 1, characterized in that the intermediate part (17) comprises two rolling tracks (24, 25) disposed in an arc of a circle and presenting as axis the said vertical axis (Z—Z), the rolling tracks being directed one (24) towards one (16) of the fixing parts and the other (25) towards the other fixing part (15), while two groups of rolling members (46, 50) borne by the second fixing part (16) so as to be movable in rotation with the second fixing part about the said vertical axis (Z—Z) are disposed respectively facing the two rolling tracks (25, 24).

3. A vehicle according to claim 2, characterized in that the rolling members (46, 50) consist of cylindrical rollers with vertical axes.

4. A vehicle according to either one of claims 2 and 3, characterized in that the intermediate part (17) comprises, on one hand a rolling part (22) shaped as at least part of a cylindrical ring presenting a vertical wall (22a) on which are formed the two rolling tracks (24, 25) and, on the other hand, a part (23) for articulation on the first fixing part (15).

5. A vehicle according to claim 4, characterized in that said rolling part (22) of the intermediate part (17) presents the shape of a nonclosed section of a ring disposed symmetrically relative to the longitudinal axis (X—X) of the articulation, and in that it is the two opposed faces (24, 25) of the vertical wall (22a) of this ring section which form the two rolling tracks.

6. A vehicle according to either of claims 4 and 5, characterized in that the ring section of the rolling part (22) of the intermediate part (17) is at most equal to 180° of angle at the centre.

7. A vehicle according to any one of claims 1 to 6, characterized in that the intermediate part (17) comprises an articulation part (23) on the first fixing part (15) and in that a block of elastic material (21) is interposed between this articulation part (23) and the said fixing part (15).

8. A vehicle according to claim 7, characterized in that the articulation part (23) of the intermediate part (17) comprises a transverse horizontal fixing member (29) and in that the block of elastic material (21) is interposed between this fixing member (29) and a receiver member (20) provided on the said first fixing part (15).

9. A vehicle according to claim 8, as dependent from claim 6 characterized in that the articulation part (23) of the intermediate part (17) is disposed substantially along a diameter of the ring section (22) forming the rolling part.

10. A vehicle according to any one of claims 1 to 9 characterized in that the articulation (14) incorporates a device (26, 35) for damping relative rotation movements comprising, on one hand, a friction surface (26) provided on one (17) of the two parts formed by the intermediate part (17) and by the second fixing part (16) and, on the other hand, a friction member (35) mounted on the other part (16).

11. A vehicle according to claim 10 as dependent from claim 4, characterized in that the ring section of the rolling part (22) presents at least one horizontal rim (26) forming the said friction surface, and in that the second fixing part (16) also presents the shape of a ring section (33) which bears the said friction member (35) also disposed horizontally, facing the friction surface (26).

12. A vehicle according to claim 11, characterized in that the friction member (35) is formed by a friction facing subject to the force of a pressure member (37).

13. A vehicle according to claim 12,

characterized in that the pressure member (37) is a member for pressure by fluid connected to control means (45).

14. A vehicle according to claim 13, characterized in that the control means (45) are connected to a detector of vehicle speed (45a).

15. A vehicle according to claim 13 characterized in that the control means (45) are connected to a detector of the braking effort of the vehicle (45b).

16. A vehicle according to claim 13, characterized in that the control means (45) are connected to a detector (45c) of full rotation stroke of the articulation about its vertical axis.

17. A vehicle according to claim 12 characterized in that the pressure member consists of at least one piston (37) controlled by fluid disposed vertically in a lodging (36) formed in the thickness of the ring section (33) of the second fixing part (16).

18. A vehicle according to claim 17 characterized in that the ring section (22) of the rolling part of the intermediate part (17) comprises two horizontal edges (26) forming with the vertical wall (22a) a U-profile within which engages the ring section (33) of the second fixing part (16) which then comprises two friction facings and two opposed action pistons.

19. A vehicle according to any one of claims 1 to 18, characterized in that it comprises a member (56) for sensing the traction or thrust force, disposed facing one of the articulation parts.

20. A vehicle according to claim 19 as dependent from claim 2, characterized in that the sensing member (56) is interposed between the second fixing part (16) and the rolling members (50) associated with the rolling track (24) directed towards this fixing part (16).

21. A vehicle according to claim 20 characterized in that the sensing member (56) consists of at least two sensors orientated radially relative to the vertical axis (Z—Z) of the intermediate part (17) along different directions which are symmetrical about the longitudinal axis (X—X) of the articulation.

FIG.3

FIG.7

FIG.1

0032079

FIG.2

0032079

FIG.4

FIG.5

FIG.6